# EUROPÄISCHE PATENTANMELDUNG

(11) **EP 1 781 056 A1**
(43) Veröffentlichungstag der Anmeldung: **02.05.2007**
(21) Anmeldenummer: 05023264.4
(22) Anmeldetag: 25.10.2005
(51) Int. Cl.: H04Q 7/38

(54) **Intrafrequenz- und Interfrequenzmessungen in einem Funkkommunikationssystem**

(71) Anmelder: SIEMENS AKTIENGESELLSCHAFT, 80333 München (DE)
(72) Erfinder: Dillinger, Markus, 81737 München (DE); Luo, Jijun, 80797 München (DE); Pan, Jianming, Dr., 1220 Wien (AT); Schulz, Egon, Dr., 80993 München (DE); Slanina, Peter, 3441 Judenau (AT)

(57) **Zusammenfassung**

Die Erfindung betrifft ein Verfahren zur Kommunikation per Funk, bei dem ein Empfänger (MS) auf einer ersten Funkfrequenz ein erstes Signal empfängt und die Empfangsstärke des ersten Signals bestimmt. Der Empfänger empfängt auf der ersten Funkfrequenz Informationen betreffend eine Empfangsstärke des ersten Signals. Erfindungsgemäß entscheidet der Empfänger (MS) unter Verwendung der bestimmten Empfangsstärke und der Informationen betreffend die Empfangsstärke über die Durchführung von mindestens einer Messung an einem zweiten auf einer zweiten Funkfrequenz ausgestrahlten Signal. Weiterhin betrifft die Erfindung eine Funkstation (MS) zur Durchführung des Verfahrens.

## Beschreibung

Die Erfindung betrifft ein Verfahren zur Kommunikation per Funk, bei dem ein Empfänger auf einer ersten Funkfrequenz ein erstes Signal empfängt und die Empfangsstärke des Signals bestimmt.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige teilnehmerseitige Funkstationen oder netzseitige Funkeinrichtungen wie Repeater, Funkzugangspunkte oder Basisstationen handeln. In einem Mobilfunkkommunikationssystem handelt es sich bei zumindest einem Teil der teilnehmerseitigen Funkstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Viele teilnehmerseitige Funkstationen können in verschiedenen Frequenzbereichen, gegebenenfalls unter Verwendung verschiedener Funktechnologien, kommunizieren. Bevor eine solche Kommunikation stattfindet, ist es in der Regel erforderlich, dass von der Funkstation Messungen an Signalen des jeweiligen Frequenzbereiches durchgeführt werden. Es ist jedoch oftmals für eine Funkstation, welche aktuell in einem ersten Frequenzbereich kommuniziert, aufwendig, Messungen in einem zweiten Frequenzbereich durchzuführen.

Der Erfindung liegt die Aufgabe zugrunde, ein effizientes Verfahren zur Kommunikation per Funk vorzustellen, bei welchem ein Empfänger ein Signal auf einer ersten Funkfrequenz empfängt und vermisst. Weiterhin soll eine geeignete Funkstation zur Durchführung des Verfahrens aufgezeigt werden.

Diese Aufgabe wird durch ein Verfahren mit den Merkmalen des Anspruchs 1 und durch eine Vorrichtung mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zur Kommunikation per Funk empfängt ein Empfänger auf einer ersten Funkfrequenz ein erstes Signal und bestimmt die Empfangsstärke. Weiterhin empfängt der Empfänger auf der ersten Funkfrequenz Informationen betreffend eine Empfangsstärke des Signals. Erfindungsgemäß entscheidet der Empfänger unter Verwendung der bestimmten Empfangsstärke und der Informationen betreffend die Empfangsstärke über die Durchführung von mindestens einer Messung an einem zweiten auf einer zweiten Funkfrequenz ausgestrahlten Signal.

Bei dem Empfänger handelt es sich vorzugsweise um eine Teilnehmerstation. Der Empfänger empfängt ein Signal und Informationen betreffend die Empfangsstärke des Signals auf einer ersten Funkfrequenz. Bei der ersten Funkfrequenz kann es sich je nach konkreter Ausgestaltung des Funkkommunikationssystems um ein schmales oder breites Frequenzband handeln. Vorteilhaft ist es, wenn der Empfänger aktuell auf der ersten Funkfrequenz kommuniziert, d.h. neben dem Signal und den Informationen betreffend die Empfangsstärke des Signals weitere Nachrichten, welche auf der ersten Funkfrequenz ausgestrahlt werden, empfängt und auswertet und gegebenenfalls auch Nachrichten auf der ersten Funkfrequenz versendet. Bei dem ersten Signal und den Informationen betreffend die Empfangsstärke des ersten Signals handelt es sich vorzugsweise um Informationen, welche nicht nur für den betrachteten Empfänger, sondern für eine Vielzahl von Empfängern bestimmt sind. Es ist möglich, dass die Informationen betreffend die Empfangsstärke des ersten Signals Bestandteil des ersten Signals sind, oder auch Bestandteil einer anderen Nachricht. Die Informationen betreffend die Empfangsstärke des ersten Signals können sich z.B. auf die Empfangsstärke an einem bestimmten Ort beziehen, oder ein Maß für eine über einen bestimmten Bereich gemittelte Empfangsstärke sein.

Der Empfänger trifft die Entscheidung, ob er Messungen an einem zweiten Signal ausführen soll, wobei das zweite Signal auf einer zweiten Funkfrequenz ausgestrahlt wird. Bei der zweiten Funkfrequenz kann es sich wie auch bei der ersten Funkfrequenz je nach konkreter Ausgestaltung des Funkkommunikationssystems um ein schmales oder breites Frequenzband handeln. Die erste und die zweite Funkfrequenz unterscheiden sich voneinander, handelt es sich um Frequenzbänder oder -bereiche, so weisen diese vorzugsweise keine Überschneidungen auf. Zur Entscheidung über die Durchführung von Messungen wird die bestimmte Empfangsstärke und die Informationen betreffend die Empfangsstärke des ersten Signals herangezogen. Dies bedeutet, dass aufgrund von auf der ersten Funkfrequenz empfangenen Nachrichten eine Entscheidung über das Vorgehen in Bezug auf eine andere Funkfrequenz gefällt wird.

Vorteilhaft ist es insbesondere, wenn eine Auswertung von Nachrichten der zweiten Funkfrequenz für diese Entscheidung nicht nötig ist. Neben der bestimmten Empfangsstärke und den Informationen betreffend die Empfangsstärke des ersten Signals kann der Empfänger gegebenenfalls weitere Größen bei der Entscheidung einbeziehen.

Bei der mindestens einen Messung, über deren Durchführung der Empfänger entscheidet, handelt es sich vorzugsweise um eine oder mehrere Messungen, welche der Vorbereitung eines Funkfrequenzwechsels des Empfängers von der ersten zu der zweiten Funkfrequenz dient bzw. dienen, bzw. welche für eine Entscheidung über einen derartigen Wechsel herangezogen werden kann bzw. können.

Die Stärke des Empfangs des ersten Signals hängt von dem aktuellen Ort des Empfängers ab. Daher ist es günstig, wenn sich der Empfänger zwischen dem Zeitpunkt / den Zeitpunkten des Empfangs des ersten Signals und der Informationen betreffend die Empfangsstärke des ersten Signals und dem Zeitpunkt der Entscheidung über die Durchführung von Messungen nicht allzu weit oder schnell fortbewegt.

In Weiterbildung der Erfindung führt der Empfänger mindestens eine Messung an dem zweiten Signal durch, falls die bestimmte Empfangsstärke größer ist als ein durch die Informationen betreffend die Empfangsstärke indizierter Wert. Ein Vergleich der beiden Empfangsstärken entspricht einer Abschätzung der Position des Empfängers, an welcher die Empfangsstärke des ersten Signals bestimmt wird, relativ zu einer Position, an welcher das erste Signal mit der durch die Informationen indizierten Stärke empfangen wird. Es ist möglich, das die mindestens eine Messung auch bei Gleichheit der beiden Empfangsstärken durchgeführt wird.

Einer Weiterbildung der Erfindung gemäß führt der Empfänger keine Messung an dem zweiten Signal durch, falls die bestimmte Empfangsstärke kleiner ist als ein durch die Informationen betreffend die Empfangsstärke indizierter Wert. Es ist möglich, das auch bei Gleichheit der beiden Empfangsstärken keine Messung durchgeführt wird.

Mit Vorzug werden die Informationen betreffend die Empfangsstärke von dem Sender des ersten Signals ausgestrahlt. Das zweite Signal kann von dem gleichen oder einem anderen Sender ausgestrahlt werden.

Einer Weiterbildung der Erfindung gemäß wird das erste Signal innerhalb eines ersten Funkabdeckungsbereiches ausgestrahlt, und das zweite Signal innerhalb eines zweiten Funkabdeckungsbereiches, wobei die beiden Funkabdeckungsbereiche überlappen. Dass die beiden Funkabdeckungsbereiche überlappen bedeutet, dass zumindest ein Teil des ersten Funkabdeckungsbereiches auch Teil des zweiten Funkabdeckungsbereiches ist. So ist es beispielsweise möglich, dass der erste Funkabdeckungsbereich ein Bestandteil des zweiten Funkabdeckungsbereiches ist oder umgekehrt. Die Sender der beiden Signale können die gleichen oder unterschiedliche sein.

Einer bevorzugten Ausgestaltung der Erfindung gemäß umfassen die Informationen betreffend die Empfangsstärke ein Maß für die Empfangsstärke des ersten Signals am Rand des zweiten Funkabdeckungsbereiches. Ist die Empfangsstärke des ersten Signals am Rand des zweiten Funkabdeckungsbereiches nicht überall gleich groß, so ist es möglich, dass das Maß für die Empfangsstärke die Empfangsstärke an einem bestimmten Teil des Randes angibt, oder auch den Mittelwert der Empfangsstärke über den Rand.

Es ist möglich, dass das zweite Signal unter Verwendung einer anderen Funktechnologie ausgestrahlt wird als das erste Signal. So kann beispielsweise für das erste Signal eine CDMA-Technologie gemäß UMTS verwendet werden, und für das zweite Signal eine OFDM-Technologie (OFDM: Orthogonal Frequency Division Multiplex). In diesem Fall handelt es sich bei dem Empfänger vorzugsweise um einen Multi-Mode Empfänger, welcher nacheinander oder gleichzeitig mittels verschiedener Funktechnologien kommunizieren kann.

In Ausgestaltung der Erfindung führt der Empfänger mindestens eine Messung an dem zweiten Signal durch, wobei die mindestens eine Messung im Anschluss zur Entscheidung über einen Wechsel von der ersten zu der zweiten Funkfrequenz verwendet wird. Nach diesem Wechsel setzt der Empfänger das, was er vor dem Wechsel auf der ersten Funkfrequenz durchgeführt hat, auf der zweiten Funkfrequenz fort. Versendet er beispielsweise vor dem Wechsel Signalisierungsinformationen auf der ersten Funkfrequenz, so versendet er diese nach dem Wechsel auf der zweiten Funkfrequenz. Die Entscheidung über die Durchführung des Wechsels kann hierbei von dem Empfänger oder von einer anderen Einrichtung, welche den Empfänger zur Durchführung des Wechsels auffordert, getroffen werden.

Vorteilhaft ist es, wenn die Informationen betreffend die Empfangsstärke einem anderen Empfänger direkt anzeigen, dass keine Messungen an dem zweiten Signal durchzuführen sind. Der andere Empfänger wertet somit, wie auch der Empfänger, die Informationen betreffend die Empfangsstärke aus. Jedoch kann der andere Empfänger im Gegensatz zu dem Empfänger den Informationen direkt entnehmen, dass er keine Messungen an dem zweiten Signal durchzuführen hat, während der Empfänger hingegen für die Entscheidung über die Durchführung von Messungen zumindest die von ihm bestimmte Empfangsstärke des ersten Signals benötigt.

In Ausgestaltung der Erfindung werden die Informationen betreffend die Empfangsstärke zuvor unter Mitwirkung von Funkstationen, welche Messungen an auf der ersten und auf der zweiten Funkfrequenz ausgestrahlten Nachrichten durchführen, ermittelt. Durch diese Messungen können z.B. Korrelationen zwischen der Empfangsstärke von Nachrichten der ersten Funkfrequenz im Vergleich zu Nachrichten der zweiten Funkfrequenz an bestimmten Orten ermittelt werden.

Die erfindungsgemäße Funkstation für ein Funkkommunikationssystem weist Mittel auf zum Empfangen eines ersten Signals auf einer ersten Funkfrequenz, Mittel zum Bestimmen der Empfangsstärke des ersten Signals, Mittel zum Empfangen von Informationen auf der ersten Funkfrequenz betreffend eine Empfangsstärke des ersten Signals, sowie Mittel zum Entscheiden über die Durchführung von Messungen an einem zweiten auf einer zweiten Funkfrequenz ausgestrahlten Signal.

Die erfindungsgemäße Funkstation eignet sich insbesondere zur Durchführung des erfindungsgemäßen Verfahrens, wobei dies auch auf die Ausgestaltungen und Weiterbildungen zutreffen kann. Hierzu kann sie weitere geeignete Mittel umfassen.

Im folgenden wird die Erfindung anhand eines Ausführungsbeispiels näher erläutert. Dabei zeigen:
- Figur 1:: einen ersten Ausschnitt aus einem Funkkommunikationssystem,
- Figur 2:: den Aufbau einer Signalisierungsnachricht,
- Figur 3:: einen zweiten Ausschnitt aus einem Funkkommunikationssystem.

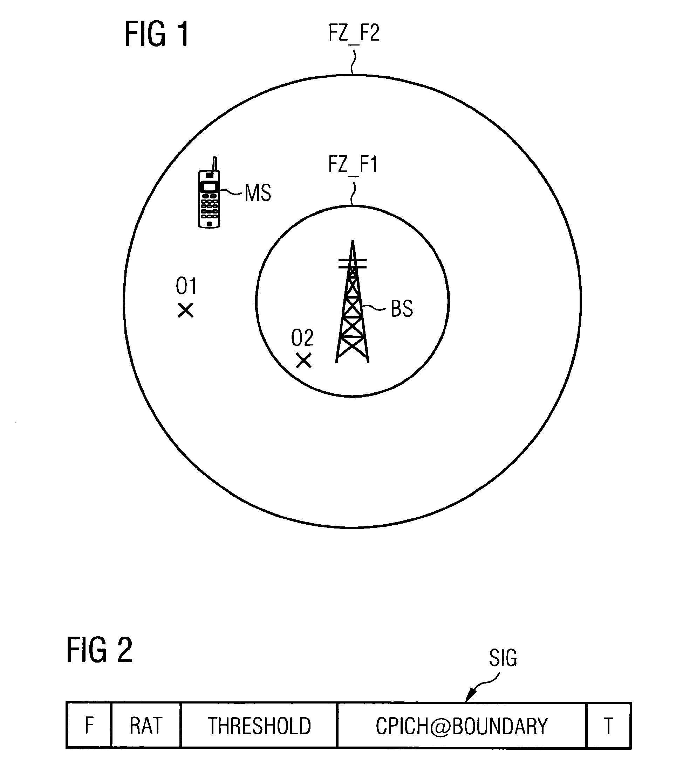

Der in Figur 1 dargestellte Ausschnitt aus einem Funkkommunikationssystem umfasst die Basisstation BS und die Teilnehmerstation MS; weitere Bestandteile des Funkkommunikationssystems sind der Übersichtlichkeit halber nicht dargestellt. Bei dem betrachteten Funkkommunikationssystem handelt es sich um ein System nach dem Standard UMTS gemäß der FDD Betriebsweise. Die Basisstation BS kommuniziert mit Teilnehmerstationen in zumindest zwei verschiedenen Frequenzbereichen, wobei für die beiden unterschiedlichen Frequenzbereiche unterschiedlich große Funkabdeckungsbereiche existieren. Es existiert die Funkzelle FZ_F2, innerhalb welcher die Basisstation BS mit Teilnehmerstationen in dem Frequenzbereich F2 kommunizieren kann, und die Funkzelle FZ_F1, innerhalb welcher die Basisstation BS mit Teilnehmerstationen in dem Frequenzbereich F1 kommunizieren kann.

Die Funkzellen FZ_F2 und FZ_F1 sind in Figur 1 als Kreise dargestellt, wobei es sich hierbei um eine Vereinfachung handelt, welche i.d.R. nicht der Form von Funkzellen in der Realität entspricht. Unter einer Funkzelle wird im folgenden unabhängig von ihrer konkreten Form und Größe ein geographischer Bereich verstanden, in welchem die Kommunikation zwischen Teilnehmerstationen und einer Basisstation in einem bestimmten Frequenzbereich und/oder unter Verwendung einer bestimmten Funktechnologie möglich ist. Es wird die Situation betrachtet, dass zwei Funkzellen verschiedener Frequenzen vorhanden sind, wobei eine der beiden Funkzellen Bestandteil der anderen ist.

Für UTRA FDD wurden die als "core bands" bezeichneten Frequenzbereiche von 1920-1980 MHz für die Aufwärtsrichtung und von 2110-2170 MHz für die Abwärtsrichtung definiert. Um asymmetrischen Funkverkehr berücksichtigen zu können, steht weiterhin der Frequenzbereich von 2500-2690 MHz zur Verfügung, welcher von UTRA FDD als "extension band" genutzt werden kann. Das "extension band" kann sowohl für die Aufwärts- und die Abwärtsrichtung, als auch lediglich für die Abwärtsrichtung genutzt werden. Bei dem Frequenzbereich F1 der Figur 1 kann es sich z.B. um einen ungepaarten für die FDD Abwärtsrichtung verwendeten Teil des "extension bands" handeln.

Im folgenden wird davon ausgegangen, dass die Teilnehmerstation MS in einem der beiden Frequenzbereiche F1 oder F2 mit der Basisstation BS kommuniziert. Zu verschiedenen Zwecken, z.B. cell selection / reselection oder Handovervorbereitung, ist es nötig, dass die Teilnehmerstation MS Messungen an von der Basisstation versendeten Signalen des anderen Frequenzbereichs, d.h. Interfrequenzmessungen, vornimmt. Unter cell selection wird die Auswahl einer Funkzelle durch eine Teilnehmerstation zum "campen" verstanden, dies ist relevant für den "idle mode" oder auch für den "connected mode" im Fall des "out of service". Unter cell reselection wird die Neuauswahl einer bereits getroffenen solchen Auswahl verstanden. Da sich die aktuell verwendeten Funkfrequenz und diejenige Funkfrequenz, auf welcher die Messungen durchzuführen sind, voneinander unterscheiden, wird üblicherweise der compressed mode eingesetzt, um die Durchführung der Messungen zu ermöglichen. Hierbei werden Nachrichten auf der aktuell zur Kommunikation verwendeten Frequenz mit erhöhter Datenrate versendet, so dass in der hierdurch eingesparten Zeit die erforderlichen Messungen auf der anderen Funkfrequenz durchgeführt werden können. Dies führt allerdings zu gesteigerter Interferenz. Teilnehmerstationen, welche gleichzeitig in den beiden unterschiedlichen Frequenzbereichen kommunizieren können (dual bzw. multi mode Geräte), bedürfen zwar des compressed mode nicht, jedoch müssen die Messungen auf den beiden unterschiedlichen Frequenzen gleichzeitig durchgeführt werden. In beiden Fällen resultiert die Durchführung von Interfrequenzmessungen in einem gesteigerten Batterieverbrauch für die jeweilige Teilnehmerstation.

Da die Größen der Funkzellen FZ_F2 und FZ_F1 sich voneinander unterscheiden, treten Situationen auf, zu welchen die Durchführung von Interfrequenzmessungen nicht notwendig ist. Dies trifft z.B. auf eine aktuell im Funkfrequenzbereich F2 kommunizierende Teilnehmerstation zu, welche sich am Ort O1 der Figur 1 befindet. Da ihr Aufenthaltsort O1 außerhalb der Funkzelle FZ_F1 liegt, ist kein ausreichender Empfang von Signalen des Funkfrequenzbereiches F1 vorhanden. Der Versuch, dennoch Messungen im Funkfrequenzbereiches F1 durchzuführen, würde somit vergebens sein. Da sowohl die Durchführung von Interfrequenzmessungen als auch der Versuch, diese Messungen durchzuführen, mit den oben erläuterten Nachteilen einhergeht, sollten derartige vergebliche Versuche vermieden werden.

Im folgenden wird ein Verfahren beschrieben, anhand dessen eine Teilnehmerstation entscheiden kann, ob die Durchführung von Interfrequenzmessungen sinnvoll ist. Hierzu misst die Teilnehmerstation die Empfangsleistung des CPICH (CPICH: Common Pilot Channel) des aktuell von ihr verwendeten Frequenzbereiches an ihrem aktuellen Aufenthaltsort. Unter dem aktuell von ihr verwendeten Frequenzbereich wird im folgenden der Frequenzbereich verstanden, auf welchem die Teilnehmerstation Signale von einer Basisstation auswertet und gegebenenfalls auch Signale an eine Basisstation versendet. Bei dem CPICH handelt es sich um einen von der Basisstation per Broadcast ausgestrahlten Kanal, welcher ein festes Bitmuster zur Unterstützung der Kanalschätzung von Teilnehmerstationen enthält. Die Empfangsleistung des CPICH in dem Frequenzbereich F2 am aktuellen Aufenthaltsort einer Teilnehmerstation wird im folgenden als F2_CPICH_RSCP bezeichnet, und in dem Frequenzbereich F1 als F1_CPICH_RSCP.

Dem CPICH oder einem anderen Signalisierungskanal des von ihr aktuell zur Kommunikation verwendeten Frequenzbereiches entnimmt die Teilnehmerstation eine im folgenden als F2_CPICH@FZ_F1_BOUNDARY bezeichnete Größe, wenn die Teilnehmerstation aktuell im Frequenzbereich F2 kommuniziert, oder als F1_CPICH@FZ_F2_BOUNDARY bezeichnete Größe, wenn die Teilnehmerstation aktuell im Frequenzbereich F1 kommuniziert. Hierbei ist die Größe F2 CPICH@FZ F1 BOUNDARY ein Maß für die Empfangsleistung des CPICH des Frequenzbereiches F2 am Rand der Funkzelle FZ_F1, und die Größe F1_CPICH@FZ_F2_BOUNDARY ein Maß für die Empfangsleistung des CPICH des Frequenzbereiches F1 am Rand der Funkzelle FZ_F2.

Die Teilnehmerstation vergleicht ihre Messung F2_CPICH_RSCP mit der Größe F2_CPICH@FZ_F1_BOUNDARY, bzw. ihre Messung F1_CPICH_RSCP mit der Größe F1_CPICH@FZ_F2_BOUNDARY, um zu entscheiden, ob die Durchführung einer Interfrequenzmessung sinnvoll ist. Übersteigt der Messwert F2_CPICH_RSCP die Größe F2_CPICH@FZ_F1_BOUNDARY, so ist eine Interfrequenzmessung in dem Frequenzbereich F1 sinnvoll, liegt der Messwert F2_CPICH_RSCP unter der Größe F2_CPICH@FZ_F1_BOUNDARY, so sollte auf die Interfrequenzmessung in dem Frequenzbereich F1 verzichtet werden. Entsprechendes gilt für den Vergleich des Messwertes F1_CPICH_RSCP mit der Größe F1_CPICH@FZ_F2_BOUNDARY.

Befindet sich eine Teilnehmerstation beispielsweise am Ort O1 und kommuniziert aktuell in dem Frequenzbereich F2, so stellt sie fest, dass ihr Messwert F2_CPICH_RSCP kleiner ist als die Größe F2_CPICH@FZ_F1_BOUNDARY. Dies bedeutet, dass sich die Teilnehmerstation weiter von der Basisstation BS entfernt befindet als der Rand der Funkzelle FZ_F1, d.h. dass sich die Teilnehmerstation außerhalb der Funkzelle FZ_F1 befindet. Eine Interfrequenzmessung ist in dem Frequenzbereich F1 ist daher nicht sinnvoll. Befindet sich die Teilnehmerstation hingegen am Ort 02, so stellt sie fest, dass ihr Messwert F2_CPICH_RSCP größer ist als die Größe F2_CPICH@FZ_F1_BOUNDARY. Dies bedeutet, dass sich die Teilnehmerstation näher bei der Basisstation BS entfernt befindet als der Rand der Funkzelle FZ_F1, d.h. dass sich die Teilnehmerstation innerhalb der Funkzelle FZ_F1 befindet. Eine Interfrequenzmessung in dem Frequenzbereich F1 kann daher durchgeführt werden.

Befindet sich die Teilnehmerstation hingegen am Ort 02 und kommuniziert aktuell in dem Frequenzbereich F1, so stellt sie fest, dass ihr Messwert F1_CPICH_RSCP größer ist als die Größe F1_CPICH@FZ_F2_BOUNDARY. Die Größe F1_CPICH@FZ_F2_BOUNDARY hat für den gegebenen Fall, dass die Funkzelle FZ_Z1 ein Teil der Funkzelle FZ_Z2 ist, den Wert Null. Dies bedeutet, dass sich die Teilnehmerstation näher bei der Basisstation BS befindet als der Rand der Funkzelle FZ_F2, d.h. dass sich die Teilnehmerstation innerhalb der Funkzelle FZ_F2 befindet.

Eine Interfrequenzmessung in dem Frequenzbereich F2 kann daher durchgeführt werden. Dies trifft offensichtlich auf jeden Aufenthaltsort innerhalb der Funkzelle FZ_F1 zu.

Um Einfluss darauf zu nehmen, an welchen Aufenthaltsorten Teilnehmerstationen Interfrequenzmessungen durchführen, bzw. bei welcher Nähe zu der Funkzelle der jeweils anderen Frequenz solche Interfrequenzmessungen durchgeführt werden, können Schwellenwerte THRESHOLD@FZ_F1 bzw. THRESHOLD@FZ_F2 verwendet werden, um welchen die Größen F2_CPICH@FZ_F1_BOUNDARY und F1_CPICH@FZ_F2_BOUNDARY verändert werden. Durch die Verwendung der Schwellenwerte ist es möglich, einen Lastausgleich (englisch: load balancing) zwischen den Kommunikationen im Frequenzbereich F1 und F2 durchzuführen. Sollen z.B. vermehrt Handover von dem Frequenzbereich F2 in den Frequenzbereich F1 durchgeführt werden, kann ein großer Wert für THRESHOLD@FZ_F1 gewählt werden, welcher von dem Wert F2_CPICH@FZ_F1_BOUNDARY abzuziehen ist, so dass viele Teilnehmerstationen Interfrequenzmessungen in dem Frequenzbereich F1 durchführen. Unter Verwendung dieser Schwellenwerte ergeben sich dann die folgenden Bedingungen:
Für Teilnehmerstationen, welche aktuell in dem Frequenzbereich F2 kommunizieren:
   (1.1)
      Gilt
      F2_CPICH_RSCP ≥ F2_CPICH@FZ_F1_BOUNDARY - THRESHOLD@FZ_F1, so ist eine Interfrequenzmessung im Frequenzbereich F1 möglich oder notwendig.
   (1.2)
      Gilt
      F2_CPICH_RSCP < F2_CPICH@FZ_F1_BOUNDARY - THRESHOLD@FZ_F1, so ist eine Interfrequenzmessung im Frequenzbereich F1 nicht notwendig.
Für Teilnehmerstationen, welche aktuell in dem Frequenzbereich F1 kommunizieren:
   (2.1)
      Gilt
      F1_CPICH_RSCP ≥ F1_CPICH@FZ_F2_BOUNDARY - THRESHOLD@FZ_F2, so ist eine Interfrequenzmessung im Frequenzbereich F2 möglich oder notwendig.
   (2.2)
      Gilt
      F1_CPICH_RSCP < F1_CPICH@FZ_F2_BOUNDARY - THRESHOLD@FZ_F2, so ist eine Interfrequenzmessung im Frequenzbereich F2 nicht notwendig.

Hierbei wird keine Kenntnis der Teilnehmerstation darüber vorausgesetzt, welche der beiden Funkzellen FZ_F1 oder FZ_F2 die größere ist.

Das beschriebene Vorgehen hat den Vorteil, dass zunächst lediglich Intrafrequenzmessungen durchgeführt werden müssen. Für diese wird der compressed mode nicht benötigt, so dass zunächst keine Erhöhung der Interferenz durch diese Messungen verursacht wird. Eine Interfrequenzmessung wird nur dann durchgeführt, wenn es sinnvoll ist, nämlich wenn sich die Teilnehmerstation innerhalb der jeweiligen anderen Funkzelle befindet und somit die andere Funkzelle ein potentieller Kandidat für eine cell selection / reselection bzw. ein Handover ist.

Figur 2 zeigt den Aufbau einer Signalisierungsnachricht SIG, mittels welcher eine Teilnehmerstation über die von ihr zur Entscheidung über die Durchführung einer Interfrequenzmessung benötigten Größen informiert wird. Die Signalisierungsnachricht SIG wird in dem Frequenzbereich ausgestrahlt, in welchem die Teilnehmerstation aktuell kommuniziert, vorzugsweise auf dem BCCH (Broadcast Control Channel). Die Nachricht SIG enthält die folgenden Informationen:
F: der Funkfrequenzbereich, auf welchen sich die Interfrequenzmessung bezieht;
optional die Größe RAT: die Angabe der Funktechnologie, welche auf dem Funkfrequenzbereich F verwendet wird;
THRESHOLD: der oben erläuterte Schwellenwert der Formeln (1.1), (1.2), (2.1) und (2.2);
CPICH@BOUNDARY: die Empfangsstärke des CPICH des Frequenzbereiches der Ausstrahlung der Nachricht SIG am Rand der Funkzelle des Funkfrequenzbereiches F;
optional die Größe T: die Anzeige einer Zeit, während welcher die Größen F, RAT, THRESHOLD und CPICH@BOUNDARY gültig sind.

Auf die Angabe der Funktechnologie RAT kann verzichtet werden, wenn es sich bei der Funktechnologie des Frequenzbereiches F und bei der Funktechnologie des Frequenzbereiches der Nachricht SIG um die gleiche Funktechnologie handelt. Die Angabe der Funktechnologie RAT unterstützt Handover zwischen verschiedenartigen Funkkommunikationssystemen, wie z.B. zwischen einem UMTS und einem WiMAX System.

Von der in Figur 2 dargestellten Reihenfolge der Größen F, RAT, THRESHOLD, CPICH@BOUNDARY und T kann abgewichen werden. Weiterhin kann die Nachricht SIG weitere, in Figur 2 nicht enthaltene Größen umfassen, wie z.B. Informationen betreffend die eigene Funkzelle. Die Größen F, RAT, THRESHOLD, CPICH@BOUNDARY und T können für eine Mehrzahl von Frequenzbereichen versendet werden. In diesem Fall kann die Nachricht SIG mehrere Sätze dieser Größen umfassen, alternativ kann auch für jeden Satz eine eigene Nachricht SIG verwendet werden.

Sollen cell selection / reselection oder Handover zu einer andere Funkzelle eingeschränkt werden, so kann auf die Versendung des Signals SIG in Bezug auf den Frequenzbereich dieser Funkzelle verzichtet werden. Ist es den Teilnehmerstationen nur dann erlaubt, Interfrequenzmessungen durchzuführen, wenn der anhand der Formeln (1.1), (1.2), (2.1) und (2.2) erläuterte Vergleich durchgeführt wurde, so ist es den Teilnehmerstationen nicht möglich, Interfrequenzmessungen in Frequenzbereichen durchzuführen, betreffend welcher sie kein Signal SIG empfangen haben.

Die Größe THRESHOLD kann über ihre bislang erläuterte Verwendung heraus dazu eingesetzt werden, spezielle Sachverhalte zu signalisieren:
- Würde in Figur 1 beispielsweise die Funkzelle FZ_F1 nicht existieren oder wäre diese temporär nicht verfügbar, so ist es möglich, dass nichtsdestotrotz die Größen F, RAT, THRESHOLD, CPICH@BOUNDARY und T betreffend den Frequenzbereich F1 in der Signalisierung des Frequenzbereiches F2 ausgestrahlt werden, wobei für die Größe THRESHOLD ein spezieller Wert gesetzt wird, welcher anzeigt, dass die Funkzelle FZ_F1 nicht verfügbar ist.
- Insbesondere für Teilnehmerstationen, welche durch einen Handover von außerhalb der Funkzelle FZ_F2 in die Funkzelle FZ_F2 gekommen sind, kann es sinnvoll sein, darüber zu informieren, dass die Funkzelle FZ_F1 kleiner ist als die Funkzelle FZ_F2. Dies kann z.B. realisiert werden, indem die Größe THRESHOLD@FZ_F2 auf einen speziellen Wert festgesetzt wird, welcher anzeigt, dass die Funkzelle FZ_F2 die Funkzelle FZ_F1 umfasst. Kommt eine Teilnehmerstation aus einer benachbarten Funkzelle, in welcher sie im Frequenzbereich F2 kommuniziert hat, kann sie kurz nach dem Handover in die Funkzelle FZ_F2, d.h. dann, wenn sie sich am Rand der Funkzelle FZ_F2 befindet, anhand des speziellen Wertes der Größe THRESHOLD@FZ_F2 erkennen, dass eine Interfrequenzmessung auf der Funkfrequenz F1 nicht nötig ist, so dass sie vorerst lediglich Intrafrequenzmessungen auf der Funkfrequenz F2 durchführt. Eine Teilnehmerstation einer benachbarten Funkzelle, welche dort im Frequenzbereich F1 kommuniziert, entnimmt dem speziellen Wert der Größe THRESHOLD@FZ_F2, dass Interfrequenzmessung auf der Funkfrequenz F2 durchzuführen sind. Die oben erläuterten Formeln (2.1) und (2.2) sind für andere Teilnehmerstationen weiterhin anwendbar, wobei der spezielle Wert so behandelt werden kann, als sei er Null. Z.B. kann es sich bei dem speziellen Wert de Größe THRESHOLD@FZ_F2 um einen negativen Wert handeln, welchen die Teilnehmerstationen zur Anwendung in den Formeln (2.1) und (2.2) als Null interpretieren.

Die Größe einer Funkzelle wird bei UTRA FDD festgelegt durch denjenigen Bereich, innerhalb welchem Teilnehmerstationen den CPICH der jeweiligen Basisstation mit ausreichender Qualität empfangen und auswerten können. Diese Ausdehnung ist nicht konstant, die Zellen können "atmen". Wird die Leistung, mit welcher eine Basisstation ihren CPICH versendet, geändert, so muss eine Anpassung der jeweiligen Größe CPICH@BOUNDARY erfolgen. Die Größe CPICH@BOUNDARY kann im Rahmen der Funknetzplanung festgelegt werden. Die Bestimmung der Größe CPICH@BOUNDARY kann z.B. auch wie im folgenden beschrieben erfolgen. Hierbei wird davon ausgegangen, dass die Größe F2_CPICH@FZ_F1_BOUNDARY neu zu bestimmen ist, z.B. weil die Sendeleistung des CPICH der Funkzelle FZ_F2 verändert wurde.
1) Netzseitig wird der Wert der Empfangsleistung des CPICH der Funkzelle FZ_F1 am Rand der Funkzelle FZ_F1 festgelegt. Den Teilnehmerstationen wird mitgeteilt, dass sie die Empfangsleistung des CPICH der Frequenz F2 messen sollen, wenn sie feststellen, dass ihre aktuelle Empfangsleistung für den CPICH der Frequenz F1 dem festgelegten Wert entspricht. Hierbei ist es möglich, dass nicht alle Teilnehmerstationen zur Durchführung der Messungen, welche der Ermittlung der Größe F2_CPICH@FZ_F1_BOUNDARY dienen, aufgefordert werden. Die zur Durchführung der Messungen verpflichteten Teilnehmerstationen können z.B. ausgewählt werden, indem jeder Teilnehmerstation im connected mode eine Zufallszahl gesendet wird, diese Teilnehmerstationen eine eigene Zufallszahl erzeugen und mit der empfangenen Zufallszahl vergleichen. Abhängig davon, ob die eigene Zufallszahl größer oder kleiner als die empfangene ist, muss eine Teilnehmerstation die Messungen durchführen oder nicht. Bei der Auswahl der Teilnehmerstation zu Messzwecken können überdies Teilnehmerstationen bevorzugt ausgewählt werden, welche keinen compressed mode zur Durchführung von Interfrequenzmessungen benötigen, und/oder deren Batterieleistung weniger beschränkt ist.
2) Die Teilnehmerstationen messen die Empfangsleistung des CPICH sowohl der Funkzelle FZ_F1 als auch der Funkzelle FZ_F2. Entspricht die Empfangsleistung des CPICH der Funkzelle FZ_F1 dem in Schritt 1) festgelegten Wert, wird der Wert der Empfangsleistung des CPICH der Funkzelle FZ_F2 gemessen und an die Basisstation gemeldet.
3) Netzseitig werden die von den Teilnehmerstationen übermittelten Messergebnisse gesammelt und aus diesen die Größe F2 CPICH@FZ F1 BOUNDARY ermittelt. Handelt es sich bei der Funkzelle FZ_F2 nicht um eine annähernd kreisförmige Funkzelle, ist es vorteilhaft, eine Mittelung oder Wichtung der Messergebnisse durchzuführen. Der netzseitig berechnete Wert der Größe F2_CPICH@FZ_F1_BOUNDARY wird dann wie oben beschrieben mittels des Signals SIG an die Teilnehmerstationen versendet.

Wird die Größe F2_CPICH@FZ_F1_BOUNDARY für mehrere Sendeleistungen des CPICH des Frequenzbereiches F2 durchgeführt, so ist eine Interpolation der Größe F2_CPICH@FZ_F1_BOUNDARY auf andere Werte der Sendeleistungen des CPICH des Frequenzbereiches F2 möglich.

In Bezug auf die Funkzelle FZ_F1 ist eine derartige Bestimmung der Größe F1_CPICH@FZ_F2_BOUNDARY nicht nötig, da gemäß Figur 1 die Funkzelle FZ_F1 Bestandteil der Funkzelle FZ_F2 ist, so dass die Größe F1_CPICH@FZ_F2_BOUNDARY zwangsläufig auf Null gesetzt wird.

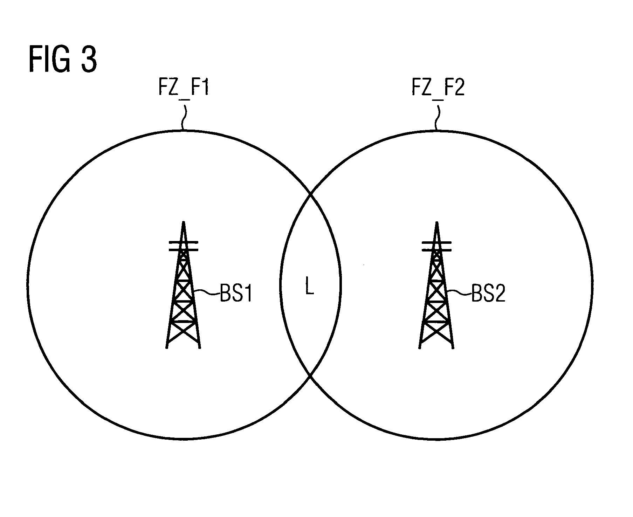

Während in Figur 1 der Fall dargestellt ist, dass die Basisstation BS sowohl die Funkzelle FZ_F1 als auch die Funkzelle FZ_F2 versorgt, ist es alternativ auch möglich, dass diese von unterschiedlichen Basisstationen versorgt werden. Weiterhin ist die Erfindung auch auf den Fall anwendbar, dass die Funkzelle FZ_F1 nicht Bestandteil der Funkzelle FZ_F2 ist, sondern dass es sich bei den Funkzellen FZ_F1 und FZ_F2 lediglich um überlappende Funkzellen handelt, wie beispielhaft in Figur 3 dargestellt. Gemäß Figur 3 versorgt eine erste Basisstation BS1 die Funkzelle FZ_F1 und eine zweite der ersten Basisstation benachbarte Basisstation BS2 die Funkzelle FZ_F2, wobei die beiden Funkzellen FZ_F1 und FZ_F2 am Rand einen Überschneidungsbereich L aufweisen. Die Erfindung erlaubt es einer Teilnehmerstation, welche sich innerhalb des Überschneidungsbereichs L befindet, zu ermitteln, dass sie Interfrequenzmessungen durchführen kann, und einer Teilnehmerstation, welche sich im restlichen Teil der Funkzelle FZ_F1 oder FZ_F2 befindet, zu ermitteln, dass keine Interfrequenzmessungen durchführbar sind. Entsprechend kann die Erfindung auch auf eine Konstellation angewandt werden, gemäß welcher es sich bei den beiden betrachteten Funkzellen um sich überschneidende Sektoren einer bestimmte Antennenmuster verwendenden Basisstation handelt, wobei für die verschiedenen Sektoren verschiedene Frequenzbereiche verwendet werden.

In diesen Fällen ist eine komplexere Berechnung als anhand der Formeln (1.1), (1.2), (2.1) und (2.2) erläutert nötig, um entscheiden zu können, ob Interfrequenzmessungen durchgeführt werden sollen. Hierbei können die folgenden Größen Eingang finden:
- Die Veränderung der Empfangsleistung des CPICH des aktuell zur Kommunikation verwendeten Frequenzbereichs aufgrund einer Bewegung der Teilnehmerstation, d.h. eine Differentiation dieser Empfangsleistung.
- Empfangsleistungen von CPICH's von benachbarten Funkzellen in dem aktuell zur Kommunikation verwendeten Frequenzbereich.

## Patentansprüche

1. Verfahren zur Kommunikation per Funk,
bei dem ein Empfänger (MS)
auf einer ersten Funkfrequenz ein erstes Signal empfängt und die Empfangsstärke des ersten Signals bestimmt, und auf der ersten Funkfrequenz Informationen (THRESHOLD, CPICH@BOUNDARY) betreffend eine Empfangsstärke des ersten Signals empfängt,
**dadurch gekennzeichnet,**
**dass** der Empfänger (MS) unter Verwendung der bestimmten Empfangsstärke und der Informationen (THRESHOLD, CPICH@BOUNDARY) betreffend die Empfangsstärke über die Durchführung von mindestens einer Messung an einem zweiten auf einer zweiten Funkfrequenz ausgestrahlten Signal entscheidet.

2. Verfahren nach Anspruch 1, bei dem
der Empfänger (MS) mindestens eine Messung an dem zweiten Signal durchführt, falls die bestimmte Empfangsstärke größer ist als ein durch die Informationen (THRESHOLD, CPICH@BOUNDARY) betreffend die Empfangsstärke indizierter Wert.

3. Verfahren nach Anspruch 1 oder 2, bei dem
der Empfänger (MS) entscheidet, keine Messung an dem zweiten Signal durchzuführen, falls die bestimmte Empfangsstärke kleiner ist als ein durch die Informationen (THRESHOLD, CPICH@BOUNDARY) betreffend die Empfangsstärke indizierter Wert.

4. Verfahren nach einem der Ansprüche 1 bis 3, bei dem
die Informationen (THRESHOLD, CPICH@BOUNDARY) betreffend die Empfangsstärke von dem Sender des ersten Signals ausgestrahlt werden.

5. Verfahren nach einem der Ansprüche 1 bis 4, bei dem
das erste Signal innerhalb eines ersten Funkabdeckungsbereichs (FZ_F2) ausgestrahlt wird, und
das zweite Signal innerhalb eines zweiten Funkabdeckungsbereichs (FZ_F1) ausgestrahlt wird,
wobei der erste (FZ_F2) und der zweite (FZ_F1) Funkabdeckungsbereich überlappen.

6. Verfahren nach Anspruch 5, bei dem
der erste Funkabdeckungsbereich (FZ_F2) ein Bestandteil des zweiten Funkabdeckungsbereichs (FZ_F1) ist, oder
der zweite Funkabdeckungsbereich (FZ_F1) ein Bestandteil des ersten Funkabdeckungsbereichs (FZ_F2) ist.

7. Verfahren nach Anspruch 5 oder 6, bei dem
die Informationen (THRESHOLD, CPICH@BOUNDARY) betreffend die Empfangsstärke ein Maß für die Empfangsstärke des ersten Signals am Rand des zweiten Funkabdeckungsbereiches (FZ_F1) umfassen.

8. Verfahren nach einem der Ansprüche 1 bis 7, bei dem
das zweite Signal unter Verwendung einer anderen Funktechnologie ausgestrahlt wird als das erste Signal.

9. Verfahren nach einem der Ansprüche 1 bis 8, bei dem
der Empfänger (MS) mindestens eine Messung an dem zweiten Signal durchführt und die mindestens eine Messung im Anschluss zur Entscheidung über einen Wechsel von der ersten zu der zweiten Funkfrequenz verwendet wird.

10. Verfahren nach einem der Ansprüche 1 bis 9, bei dem
die Informationen (THRESHOLD, CPICH@BOUNDARY) betreffend die Empfangsstärke einem anderen Empfänger direkt anzeigen, dass keine Messung an dem zweiten Signal durchzuführen ist.

11. Verfahren nach einem der Ansprüche 1 bis 10, bei dem
die Informationen (THRESHOLD, CPICH@BOUNDARY) betreffend die Empfangsstärke zuvor unter Mitwirkung von Funkstationen, welche Messungen an auf der ersten und auf der zweiten Funkfrequenz ausgestrahlten Nachrichten durchführen, ermittelt werden.

12. Funkstation (MS) für ein Funkkommunikationssystem, mit
Mitteln zum Empfangen eines ersten Signals auf einer ersten Funkfrequenz,
Mitteln zum Bestimmen der Empfangsstärke des ersten Signals, und
Mitteln zum Empfangen auf der ersten Funkfrequenz von Informationen (THRESHOLD, CPICH@BOUNDARY) betreffend eine Empfangsstärke des ersten Signals,
**gekennzeichnet durch**
Mittel zum Entscheiden über die Durchführung von mindestens einer Messung an einem zweiten auf einer zweiten Funkfrequenz ausgestrahlten Signal
